# EUROPEAN PATENT APPLICATION

(11) **EP 4 145 030 A1**
(43) Date of publication of application: **08.03.2023**
(21) Application number: 22192343.6
(22) Date of filing: 26.08.2022
(51) Int. Cl.: F16K 27/12, F16K 27/06, F16K 11/087

(54) **VALVE DEVICE AND VALVE BODY PORTION**

(30) Priority: 07.09.2021 JP 2021145669
(71) Applicant: Fujikoki Corporation, Tokyo 158-0082 (JP)
(72) Inventor: MORITA, Kento, Tokyo, 1580082 (JP); HARADA, Takao, Tokyo, 1580082 (JP); MOCHIZUKI, Kenichi, Tokyo, 1580082 (JP); HARA, Seiichi, Tokyo, 1580082 (JP)
(74) Representative: Ter Meer Steinmeister & Partner

(57) **Abstract**

Provided is a valve device capable of coping with changes in piping specifications easily while suppressing costs.

A valve device includes a valve body portion having a male socket including a plurality of holes, and a valve element including a communication passage, the valve element being configured to rotate within the male socket, a joint body portion including a plurality of piping portions, the joint body portion including a female socket configured to engage with or disengage from the male socket, and a coupling mechanism configured to couple the valve body portion and the joint body portion in a state where the male socket and the female socket are engaged, wherein, according to a rotational position of the valve element, at least two of the plurality of piping portions of the joint body portion are configured to communicate through the communication passage of the valve element and the holes of the male socket.

## Description

### [Technical Field]

The present invention relates to a valve device and a valve body portion.

### [Background Art]

A flow passage switching valve is known, which is assembled to an intermediate area of a fluid piping system and serves as a valve device for controlling switching or opening/closing of fluid flow passages, for example. Patent Literature 1 discloses a flow passage switching valve including a valve element having a communication passage, a valve chamber in which the valve element is rotatably accommodated, and a valve body including an inlet flow passage and a plurality of outlet flow passages communicated with the valve chamber, wherein by rotational operation of the valve element, the inlet flow passage and one of the plurality of outlet flow passages are communicated via the communication passage.

### [Citation List]

### [Patent Literature]

[PTL 1] Japanese Patent Application Laid-Open Publication No. 2018-115691

### [Summary of Invention]

### [Technical Problem]

The positions of the inlet flow passage and outlet flow passages provided on the valve body may vary according to the specification of the piping. If the positions of the inlet flow passage and the outlet flow passages vary, the same flow passage switching valve cannot be used, such that in the prior art, a new flow passage switching valve was newly designed, according to which the costs of the valve devices were increased.

In consideration of the problems mentioned above, an object of the present invention is to provide a valve device and a valve body portion that enable to suppress costs while easily coping with specification changes of the piping.

### [Solution to Problem]

A valve device according to the present invention includes:
a valve body portion including a male socket including a plurality of holes, and a valve element including a communication passage, the valve element being configured to rotate within the male socket;
a joint body portion including a plurality of piping portions, the joint body portion including a female socket configured to engage with or disengage from the male socket; and
a coupling mechanism configured to couple the valve body portion and the joint body portion in a state where the male socket and the female socket are engaged,
wherein, according to a rotational position of the valve element, at least two of the plurality of piping portions of the joint body portion are configured to communicate through the communication passage of the valve element and any holes of the male socket.

A valve body portion according to the present invention is a valve body portion that constitutes a valve device by being coupled via a coupling mechanism to a joint body portion including a plurality of piping portions and a female socket, the valve body portion including:
a male socket configured to be engaged to and disengaged from the female socket of the joint body portion;
a plurality of holes included in the male socket; and
a valve element comprising a communication passage provided in an inner side thereof, the valve element being configured to rotate within the male socket,
wherein, according to a rotational position of the valve element, at least two of the plurality of piping portions of the joint body portion are configured to communicate through the communication passage of the valve element and any holes of the male socket.

### [Advantageous Effects of Invention]

According to the present invention, a valve device and a valve body portion that enable to suppress costs while easily coping with specification changes of the piping can be provided.

### [Brief Description of Drawings]

[FIG. 1] FIG. 1 is a perspective view of a valve device according to a first embodiment of the present invention.
[FIG. 2] FIG. 2 is a front view of the valve device.
[FIG. 3] FIG. 3 is a sectional view taken from a side direction in which the valve device is cut at a cross-section passing line A-A of FIG. 1.
[FIG. 4] FIG. 4 is a perspective view of the valve device in a state where a valve body portion and a joint body portion are separated.
[FIG. 5] FIG. 5 is a perspective view of the valve device in a state where the valve body portion and a different joint body portion are separated.
[FIG. 6] FIG. 6 is a perspective view of a valve device according to a second embodiment in a state where a valve body portion and a joint body portion are separated.

### [Description of Embodiments]

An embodiment of a valve device and a valve body portion according to the present invention will be described with reference to the accompanied drawings.

### (First Embodiment)

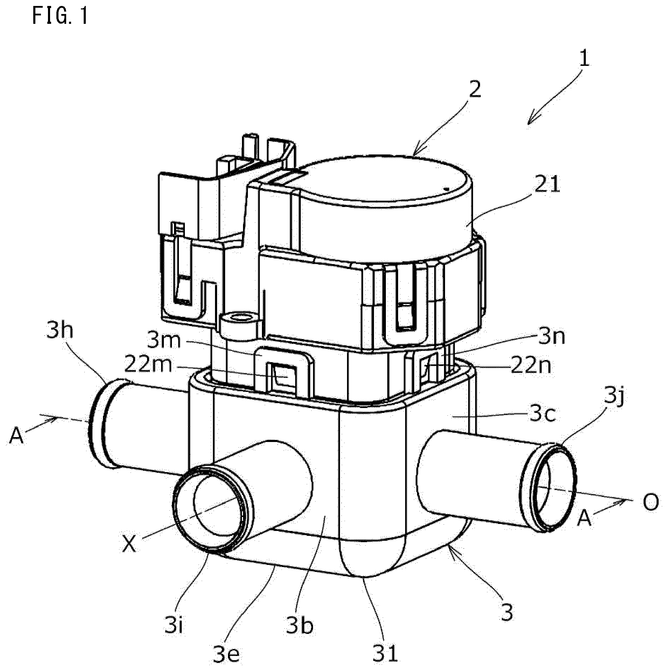

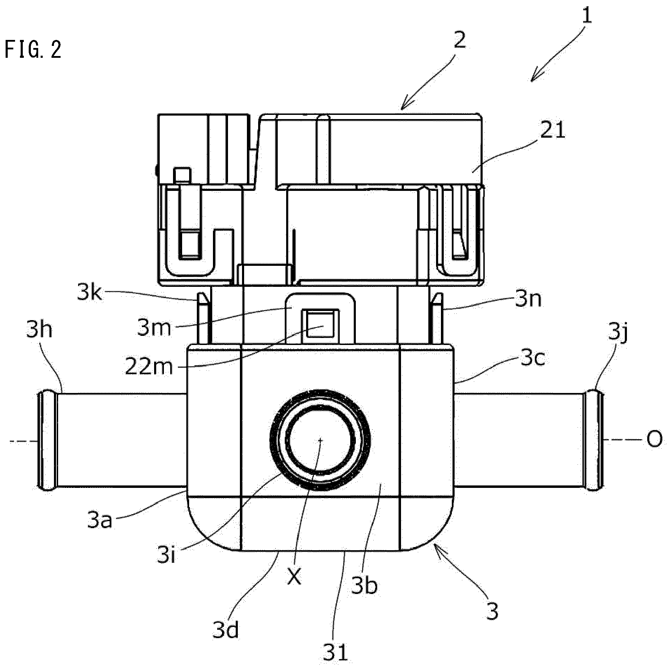

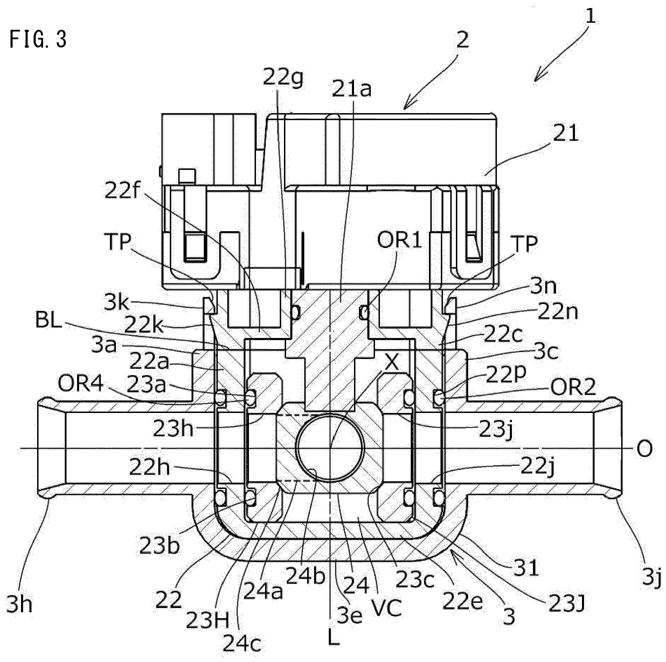

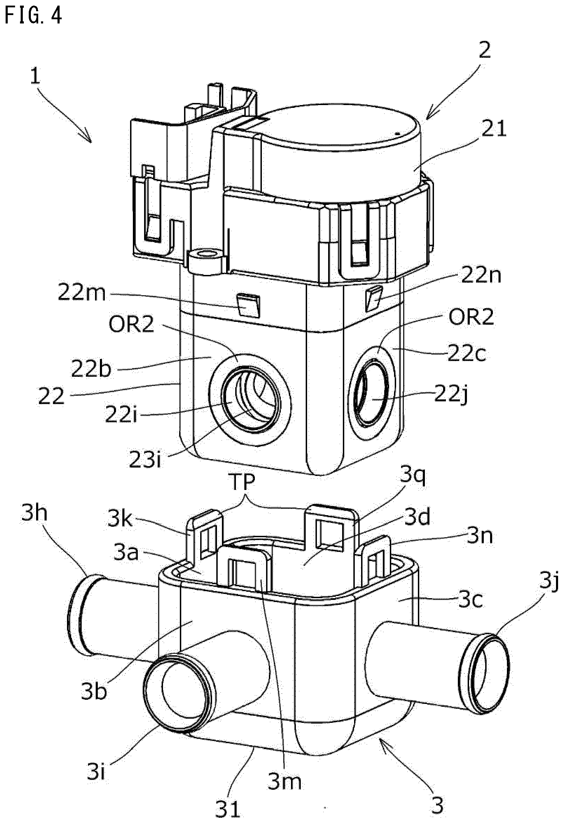

FIG. 1 is a perspective view of a valve device 1 according to a first embodiment of the present invention. FIG. 2 is a front view of the valve device 1. FIG. 3 is a cross-sectional view taken from a side direction of the valve device 1 cut at a cross-section passing line A-A of FIG. 1. FIG. 4 is a perspective view of the valve device 1 illustrating a state where a valve body portion 2 and a joint body portion 3 are separated.

The valve device 1 mainly includes the valve body portion 2 and the joint body portion 3. In the description of the embodiment, it is assumed that the valve body portion 2 is arranged on an upper side and the joint body portion 3 is arranged on a lower side.

The valve body portion 2 is coupled to the joint body portion 3 via a coupling mechanism described later to constitute the valve device 1. The valve body portion 2 includes a motor unit 21 with an output shaft 21a protruded to a lower direction, a male socket 22 formed to extend from the motor unit 21 so as to surround the output shaft 21a, seat portions 23H and 23J that are arranged on an inner side of the male socket 22, and a valve element 24 joined to a tip of the output shaft 21a. An axis of rotation of the output shaft 21a is denoted as L.

The male socket 22 includes a first inner side wall 22a, a second inner side wall 22b, a third inner side wall 22c, a fourth inner side wall, which is opposed to the second inner side wall 22b and not shown, and a square-shaped bottom wall 22e which is formed continuously to lower ends of the above-mentioned side walls. A flange portion 22f is formed continuously to inner side surfaces of the first inner side wall 22a, the second inner side wall 22b, the third inner side wall 22c, and the fourth inner side wall (not shown), extending toward the output shaft 21a. A hollow cylindrical portion 22g is formed continuously at a center of the flange portion 22f. The upper ends of the first inner side wall 22a, the second inner side wall 22b, the third inner side wall 22c, the fourth inner side wall (not shown), and the hollow cylindrical portion 22g are fixed to the motor unit 21. The male socket 22 is integrated by separately forming the upper-side component and the lower-side component, inserting the seat portions 23H and 23J and the valve element 24 between the upper and lower components, and thereafter welding them together at a joint line BL. The inner side of the male socket 22 constitutes a valve chamber VC.

The output shaft 21a passes through the hollow cylindrical portion 22g and protrudes downward from a lower end thereof. The output shaft 21a and the hollow cylindrical portion 22g are fit to one another in a relatively rotatable manner, and an O-ring OR1 is arranged therebetween.

The first inner side wall 22a includes a first intermediate hole 22h, the second inner side wall 22b includes a second intermediate hole 22i (FIG. 4), and the third inner side wall 22c includes a third intermediate hole 22j, but the fourth inner side wall (not shown) does not have a hole. A sealing groove 22p is formed to each of the first inner side wall 22a at a circumference of the first intermediate hole 22h, the second inner side wall 22b at a circumference of the second intermediate hole 22i, and the third inner side wall 22c at a circumference of the third intermediate hole 22j, and in each sealing groove 22p is arranged an O-ring OR2.

A first wedge portion 22k whose distance from the first inner side wall 22a reduces toward the lower direction is formed on an outer surface at a vicinity of a center area of the upper end of the first inner side wall 22a, a second wedge portion 22m (FIG. 4) whose distance from the second inner side wall 22b reduces toward the lower direction is formed on an outer surface at a vicinity of a center area of the upper end of the second inner side wall 22b, and a third wedge portion 22n whose distance from the third inner side wall 22c reduces toward the lower direction is formed on an outer surface at a vicinity of a center area of the upper end of the third inner side wall 22c. Similarly, a fourth wedge portion (not shown) whose distance from the fourth inner side wall reduces toward the lower direction is formed on an outer surface at a vicinity of a center area of the upper end of the fourth inner side wall. The shapes of the respective wedge portions and the installation height from the lower end of the male socker 22 are the same.

An annular seat portion 23H is arranged on an inner side of the first inner side wall 22a of the male socket 22, and an annular seat portion 23J is arranged on an inner side of the third inner side wall 22c. The seat portion 23H opposed to the first inner side wall 22a includes a first inner hole 23h opposed to the first intermediate hole 22h, and the seat portion 23J opposed to the third inner side wall 22c includes a third inner hole 23j opposed to the third intermediate hole 22j. There are no seat portions arranged on the inner sides of the second inner side wall 22b and the fourth inner side wall.

A sealing groove 23a is formed on an outer side surface at a circumference of each of the first inner hole 23h and the third inner hole 23j, and an O-ring OR4 is arranged within each sealing groove 23a.

A spherical surface seat 23c is formed on an inner circumference at an inner end portion of each of the first inner hole 23h and the third inner hole 23j in such a manner as to be connected to each inner hole.

The valve element 24 arranged between the seat portions 23H and 23J have an approximately spherical configuration, and a circumference surface thereof forms a spherical surface portion 24c. By having the spherical surface portion 24c abut against the whole circumference of the spherical surface seat 23c, an airtight seal between the two members is ensured, while the valve element 24 is enabled to rotate about an axis L together with the output shaft 21a. Further, the spherical surface seat 23c and the spherical surface portion 24c can also be a conical seat and a cone-shaped portion which are capable of being abutted against one another.

The valve element 24 forms two openings 24a and 24b at 90-degree phases about the axis L at a position in the up-down direction opposing the first inner hole 23h and the third inner hole 23j. The openings 24a and 24b do not pass through the valve element 24, and inner ends of the openings 24a and 24b are communicated in the inner side of the valve element 24 to form a communication passage.

The joint body portion 3 is made of resin, and includes a female socket 31 composed of a first outer side wall 3a, a second outer side wall 3b, a third outer side wall 3c, a fourth outer side wall 3d, and a square-shaped bottom wall 3e formed continuously to a lower end of the above-mentioned side walls. The bottom wall 3e has a greater outer size than the bottom wall 22e of the male socket 22.

A first piping portion 3h is formed on the first outer side wall 3a so as to align with the first intermediate hole 22h, a second piping portion 3i is formed on the second outer side wall 3b so as to align with the second intermediate hole 22i, and a third piping portion 3j is formed on the third outer side wall 3c so as to align with the third intermediate hole 22j. No piping portion is formed on the fourth outer side wall 3d. The first piping portion 3h and the third piping portion 3j have a common axis O which is orthogonal to axis L, and an axis X of the second piping portion 3i is orthogonal to the axis L and the axis O. The respective piping portions are connected to a piping not shown.

A first rectangular frame 3k is formed continuously to a center area at an upper end of the first outer side wall 3a, a second rectangular frame 3m is formed continuously to a center area at an upper end of the second outer side wall 3b, a third rectangular frame 3n is formed continuously to a center area at an upper end of the third outer side wall 3c, and a fourth rectangular frame 3q is formed continuously to a center area at an upper end of the fourth outer side wall 3d. The respective rectangular frames have a common shape, and an inner opening of each of the rectangular frame can accommodate the wedge portion. Assembly can be carried out more smoothly by providing an inclined surface TP (FIG. 3) that is inclined to correspond to the wedge portion on an inner side surface at the upper end of the rectangular frame. The first wedge portion 22k, the second wedge portion 22m, the third wedge portion 22n, and the fourth wedge portion together with the first rectangular frame 3k, the second rectangular frame 3m, the third rectangular frame 3n, and the fourth rectangular frame 3q constitute a coupling mechanism.

### (Assembly of Valve Body Portion and Joint Body Portion)

The valve body portion 2 and the joint body portion 3 are manufactured independently. When assembling the valve body portion 2 and the joint body portion 3, as illustrated in FIG. 4, the valve body portion 2 is arranged above the joint body portion 3, and the both members are moved toward each other, such that the male socket 22 of the valve body portion 2 enters the female socket 31 of the joint body portion 3 and is engaged therewith, while the first rectangular frame 3k, the second rectangular frame 3m, the third rectangular frame 3n, and the fourth rectangular frame 3q approach the first wedge portion 22k, the second wedge portion 22m, the third wedge portion 22n, and the fourth wedge portion.

In response to the relative movement of the valve body portion 2 and the joint body portion 3, the rectangular frames (also referred to as frame portions) respectively ride over the wedge portions and are elastically deformed thereby, and at a point of time when they have moved beyond the wedge portions, they are returned from the elastically deformed state. Thereby, the wedge portions are positioned within the rectangular frames, that is, the rectangular frames are locked by the upper surface of the wedge portions, such that the valve body portion 2 and the joint body portion 3 are held at a fixed position and separation thereof is prevented.

In such a state, the first inner side wall 22a, the second inner side wall 22b, the third inner side wall 22c, and the fourth inner side wall (not shown) of the male socket 22 oppose the first outer side wall 3a, the second outer side wall 3b, the third outer side wall 3c, and the fourth outer side wall 3d of the joint body portion 3, respectively, and a bottom surface of the bottom wall 22e abuts against an upper surface of the bottom wall 3e.

In this state, the first intermediate hole 22h and the first inner hole 23h are communicated with the first piping portion 3h. The second piping portion 3i communicates with the valve chamber VC via the second intermediate hole 22i. The third intermediate hole 22j and the third inner hole 23j are communicated with the third piping portion 3j.

### (Operation of Valve Device)

In the state illustrated in FIG. 3, the opening 24a of the valve element 24 opposes the first inner hole 23h and the opening 24b communicates with the valve chamber VC, but the third inner hole 23j is blocked by the circumference surface of the valve element 24. In such a state, the first piping portion 3h and the second piping portion 3i are mutually communicated via the first intermediate hole 22h and the first inner hole 23h, the communication passage within the valve element 24, the valve chamber VC, and the second intermediate hole 22i, but the third piping portion 3j is in a closed state.

In contrast, by rotating the output shaft 21a for 90 degrees by supplying power to the motor unit 21, the opening 24a of the valve element 24 communicates with the valve chamber VC and the opening 24b opposes the third inner hole 23j, but the first inner hole 23h is blocked by the circumference surface of the valve element 24. In such a state, the second piping portion 3i and the third piping portion 3j are communicated via the second intermediate hole 22i, the valve chamber VC, the communication passage within the valve element 24, the third intermediate hole 22j, and the third inner hole 23j, but the first piping portion 3h is in a closed state.

As described, according to the valve device 1 of the present embodiment, by supplying power to the motor unit 21 and rotating the output shaft 21a, at least two of the piping portions of the joint body portion 3 can be communicated through the communication passage of the valve element 24 and the holes of the male socket 22 according to the rotational position of the valve element 24. Thereby, the flow of fluid can be switched to flow through the first piping portion 3h and the second piping portion 3i or to flow through the second piping portion 3i and the third piping portion 3j, for example.

### (Assembly of Valve Body Portion and Different Joint Body Portion)

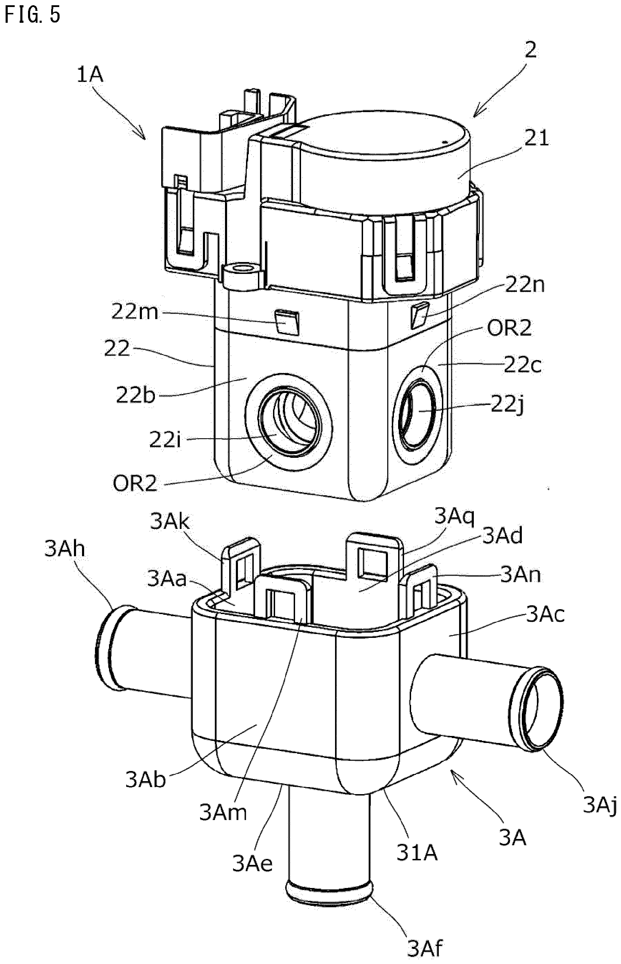

FIG. 5 is a perspective view of a valve device 1A illustrating a state in which the valve body portion 2 and a different joint body portion 3A are separated. The valve body portion 2 is the same as that illustrated in FIGs. 1 to 4. The joint body portion 3A includes, similar to that illustrated in FIGs. 1 to 4, a female socket 31A composed of a first outer side wall 3Aa, a second outer side wall 3Ab, a third outer side wall 3Ac, a fourth outer side wall 3Ad, and a square-shaped bottom wall 3Ae which is formed continuously to lower ends of the above-mentioned side walls.

A first rectangular frame 3Ak is formed continuously to a center area at an upper end of the first outer side wall 3Aa, a second rectangular frame 3Am is formed continuously to a center area at an upper end of the second outer side wall 3Ab, a third rectangular frame 3An is formed continuously to a center area at an upper end of the third outer side wall 3Ac, and a fourth rectangular frame 3Aq is formed at a center area at an upper end of the fourth outer side wall 3Ad.

Further, a first piping portion 3Ah is formed on the first outer side wall 3Aa and a third piping portion 3Aj is formed on the third outer side wall 3Ac, but no piping portion is formed on the second outer side wall 3Ab. However, a bottom piping portion 3Af is formed on the bottom wall 3Ae.

When adopting the joint body portion 3A, it is preferable to use a valve element (not shown) in which openings whose inner side ends are mutually communicated are formed on the side walls and the bottom wall.

When assembling the valve body portion 2 and the joint body portion 3A, according to the relative movements thereof, the rectangular frames 3Ak to 3Aq respectively ride over the wedge portions 22k to 22n and are elastically deformed, and at a point of time when they have moved beyond the wedge portions, they are returned from the elastically deformed state. Thereby, the wedge portions are positioned within the rectangular frames, that is, the rectangular frames are locked by the upper surface of the wedge portions, such that the valve body portion 2 and the joint body portion 3A are held at a fixed position and separation thereof is prevented. By removing the rectangular frames 3Ak to 3Aq from the wedge portions 22k to 22n, the valve body portion 2 and the joint body portion 3A can be separated from one another.

When adopting the joint body portion 3A, by supplying power to the motor unit 21 and rotating the output shaft 21a, the flow of fluid can be switched to flow through the first piping portion 3Ah and the second piping portion 3Af or to flow through the third piping portion 3Aj and the bottom piping portion 3Af, for example.

As described, by adopting a common coupling portion between the valve body portion 2 and the joint body portion 3 or 3A, the valve body portion 2 can be used in common and only the joint body portion 3 or 3A can be exchanged to cope with various piping specifications, such that the costs of the valve devices 1 and 1A can be cut down.

According to the embodiment described above, even if the valve body portion 2 and the joint body portion 3 or 3A are relatively pivoted for a phase of 90 degrees about the axis L, the positional relationship of the rectangular frame and wedge portion is not changed, such that attachment thereof is enabled. The shape of the joint body portion is not limited to the above shape.

### (Second Embodiment)

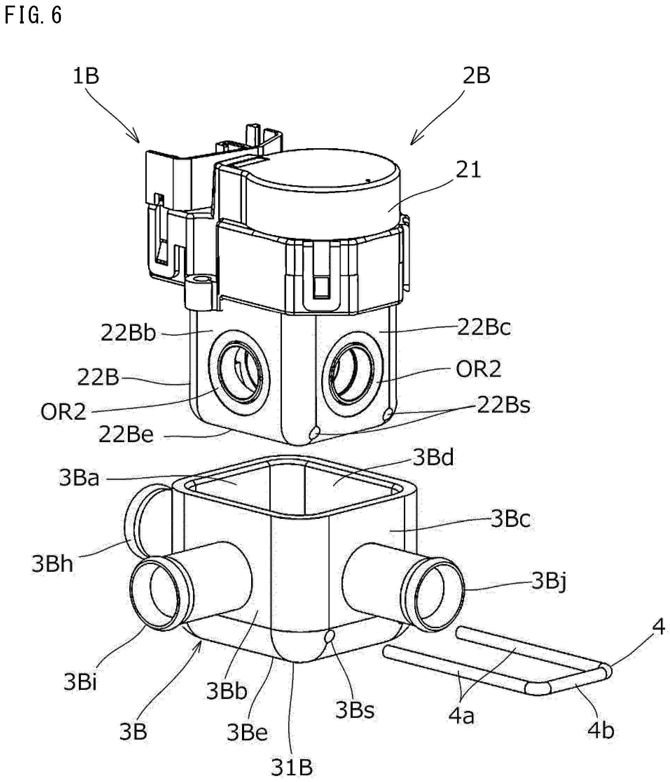

FIG. 6 is a perspective view of a valve device 1B illustrating a state in which a valve body portion 2B and a joint body portion 3B are separated according to a second embodiment. The present embodiment is similar to the aforementioned embodiment except for the coupling mechanism coupling the valve body portion 2B and the joint body portion 3B, such that similar descriptions are omitted.

In the present embodiment, a pair of through holes 22Bs are formed in parallel so as to pass through a bottom wall 22Be connected to a lower end of a third inner side wall 22Bc of a male socket 22B. Further, a pair of circular openings 3Bs are formed in correspondence to the through holes 22Bs in a vicinity of a lower end of a third outer side wall 3Bc (and opposing first outer side wall 3Ba) of a female socket 31B.

A U-shaped pin member 4 is used to couple the valve body portion 2B and the joint body portion 3B. The pin member 4 is formed by bending a round bar made of metal, for example, and includes a pair of parallel pin portions 4a, and a coupling pin portion 4b for coupling the ends of the parallel pin portions 4a. The through holes 22Bs, the circular openings 3Bs, and the pin member 4 constitute a coupling mechanism.

When assembling the valve body portion 2B and the joint body portion 3B, as illustrated in FIG. 6, the valve body portion 2B is arranged above the joint body portion 3B and the two members are moved close to each other, such that the male socket 22B enters the joint body portion 3B and the through holes 22Bs are aligned with the circular openings 3Bs.

Then, the parallel pin portions 4a of the pin member 4 are inserted through the circular openings 3Bs into the through holes 22Bs. The inserted parallel pin portions 4a are passed through the through holes 22Bs and fit to the openings on the first outer side wall 3Ba on the other side. Since the parallel pin portions 4a extend across the circular openings 3Bs and the through holes 22Bs, the valve body portion 2B and the joint body portion 3B are held at a fixed position and are prevented from being separated. The valve body portion 2B and the joint body portion 3B can be detached by removing the parallel pin portions 4a from the circular openings 3Bs.

For example, it is also possible to provide a small hole formed to pass radially through a tip of each of the parallel pin portions 4a, and to insert a snap pin or a split pin to the small hole formed at the tip that is protruded through the opening formed on the first outer side wall 3Ba, such that the parallel pin portions 4a are prevented from being disengaged.

It is clearly the case that any joint body portion on which similar circular openings are formed on the first and third outer side walls can be assembled to the valve body portion 2B using the pin members 4. Therefore, similar to the first embodiment, only the joint body portion can be exchanged while using a common valve body portion 2B to correspond to various piping specifications, such that the costs of the valve device 1B can be cut down.

The present invention is not limited to the embodiments described above. Arbitrary deformation of various components of the embodiments described above can be adopted within the scope of the present invention. Further, adding or omitting of an arbitrary component to or from the embodiments described above is also enabled.

### [Explanation of References]

1, 1A, 1B Valve device
2, 2B Valve body portion
21 Motor unit
22, 22B Male socket
23 Seat portion
24 Valve element
3, 3A, 3B Joint body portion
31, 31A, 31B Female socket
4 Pin member

## Claims

1. A valve device comprising:
a valve body portion comprising a male socket including a plurality of holes, and a valve element including a communication passage, the valve element being configured to rotate within the male socket;
a joint body portion comprising a plurality of piping portions, the joint body portion including a female socket configured to engage with or disengage from the male socket; and
a coupling mechanism configured to couple the valve body portion and the joint body portion in a state where the male socket and the female socket are engaged,
wherein, according to a rotational position of the valve element, at least two of the plurality of piping portions of the joint body portion are configured to communicate through the communication passage of the valve element and any holes of the male socket.

2. The valve device according to claim 1,
wherein the male socket comprises a plurality of inner side walls including the holes,
wherein the female socket comprises a plurality of outer side walls connected to the piping portions, and
wherein, in a state where the male socket and the female socket are engaged, a hole on the inner side wall opposes a piping portion on the outer side wall.

3. The valve device according to claim 2,
wherein the coupling mechanism comprises wedge portions formed on the inner side walls and frame portions formed on the outer side walls, and
wherein, in a state where the male socket and the female socket are engaged, the wedge portions are accommodated within the frame portions, and separation of the valve body portion and the joint body portion is prevented.

4. The valve device according to claim 3,
wherein, as the valve body portion and the joint body portion approach each other, the frame portions are configured to ride over the wedge portions and elastically deform, and in a state where the wedge portions are accommodated within the frame portions, the frame portions are configured to be returned from the elastically deformed state.

5. The valve device according to claim 3 or claim 4,
wherein inclined surfaces corresponding to the wedge portions are provided on inner side surfaces at upper ends of the frame portions.

6. The valve device according to claim 2,
wherein the coupling mechanism comprises an opening formed on the female socket, a through hole formed on the male socket, and a pin member, and
wherein, in a state where the male socket and the female socket are engaged, the pin member is configured to be inserted to the opening and the through hole which are in an overlapped state, such that the valve body portion and the joint body portion is prevented from being separated.

7. A valve body portion configured to constitute a valve device by being coupled via a coupling mechanism to a joint body portion comprising a plurality of piping portions and a female socket, the valve body portion comprising:
a male socket configured to be engaged to and disengaged from the female socket of the joint body portion;
a plurality of holes included in the male socket; and
a valve element comprising a communication passage provided on an inner side thereof, the valve element being configured to rotate within the male socket,
wherein, according to a rotational position of the valve element, at least two of the plurality of piping portions of the joint body portion are configured to communicate through the communication passage of the valve element and any holes of the male socket.
